# EUROPEAN PATENT APPLICATION

(11) **EP 4 813 811 A1**
(43) Date of publication of application: **30.09.2026**
(21) Application number: 26164449.6
(22) Date of filing: 12.03.2026
(51) Int. Cl.: B62D 25/00, B62D 25/08

(54) **VEHICLE FRONT PORTION STRUCTURE**

(30) Priority: 28.03.2025 JP 2025057137
(71) Applicant: Toyota Jidosha Kabushiki Kaisha, Toyota-shi, Aichi-ken 471-8571 (JP)
(72) Inventor: KAGAMI, Ayaka, TOYOTA-SHI, AICHI-KEN, 471-8571 (JP); MURATA, Soshiro, TOYOTA-SHI, AICHI-KEN, 471-8571 (JP)
(74) Representative: Cabinet Beau de Loménie

(57) **Abstract**

A vehicle front portion structure (10, 10A, 10B, 10C, 10D, 10E) includes a frame body portion (12) and a first cover member (30). The frame body portion (12) includes: front side member portions (14), a left and right pair of upper member portions (18) disposed at upper sides of the front side member portions (14) and being curved or inclined in a downward direction, and suspension tower portions (22) disposed further toward an inner side in a vehicle width direction than the upper member portions (18). The first cover member (30) covers the left and right pair of upper member portions (18) along the front-rear direction, the first cover member (30) is secured to positions of the upper member portions (18) that are further toward a front side than portions of the upper member portions (18) overlapping with the suspension tower portions (22) in the front-rear direction, and the first cover member (30) is secured to positions of the upper member portions (18) overlapping with the suspension tower portions (22) as viewed in a side view.

## Description

### BACKGROUND

### Technical Field

This disclosure relates to a vehicle front portion structure.

### Related Art

Chinese Utility Model Registration No. 217,496,273 discloses a vehicle front portion structure in which upper member portions, front side member portions, and suspension tower portions are integrally formed by casting.

### SUMMARY

In the vehicle front portion structure described in Chinese Utility Model Registration No. 217,496,273, at the time of an impact from the vehicle front side, a frame body portion may be broken before impact absorption portions of the front side member portions are appropriately axially compressed.

If the frame body portion is broken, there is the concern that the impact load will not be sufficiently absorbed.

In consideration of the above circumstances, the present disclosure obtains a vehicle front portion structure that can ensure the necessary amount of energy absorption.

A vehicle front portion structure pertaining to a first aspect of the disclosure includes: a frame body portion integrally formed to include a left and right pair of front side member portions that extend in a vehicle front-rear direction, a left and right pair of upper member portions that are disposed at upper sides of the front side member portions and that are curved or inclined in a vehicle downward direction as viewed in a vehicle side view, and a left and right pair of suspension tower portions that are disposed further toward an inner side in a vehicle width direction than the upper member portions; and a first cover member that is disposed so as to cover each of the left and right pair of upper member portions along the vehicle front-rear direction, the first cover member is secured to positions of the upper member portions that are further toward a front side than positions of the upper member portions that overlap with the suspension tower portions in the vehicle front-rear direction. And the first cover member is secured to positions of the upper member portions that overlap with the suspension tower portions in the vehicle front-rear direction as viewed in a vehicle side view.

In the frame body portion integrally formed as described above, the upper member portions are curved or inclined downward, so a moment in a direction that offsets a mode in which the entire frame body portion is lifted up can be generated. However, at the time of a frontal impact, the frame body portion may be broken before impact absorption portions of the front side member portions are appropriately axially compressed, and if the frame body portion is broken, a mode in which the entire frame body portion is lifted up is promoted. If the frame body portion is broken in this way, at the upper member portions, vicinities of positions corresponding to front ends, in the vehicle front-rear direction, of the suspension tower portions as viewed in a vehicle side view are considered to be brake origin points at the time of a frontal impact.

In the vehicle front portion structure pertaining to the first aspect of the disclosure, the first cover member is disposed so as to cover each of the left and right pair of upper member portions along the vehicle front-rear direction. Furthermore, the first cover member is secured to the upper member portions that are further toward a front side than position of the upper member portion that overlap with the suspension tower portions in the vehicle front-rear direction, and the first cover member is also secured to the upper member portions at positions that overlap with the suspension tower portions in the vehicle front-rear direction as viewed in a vehicle side view. That is, the first cover member is secured to the upper member portions in the vicinities of the positions corresponding to the front ends of the suspension tower portions as viewed in a vehicle side view, i.e., in front and back of the portions considered to be brake origin points at the time of a frontal impact. The first cover member covers the portions considered to be brake origin points at the time of a frontal impact, so deformation in which the frame body portion projects upward or brake of the frame body portion at the time of a frontal impact can be inhibited. Impact absorption by axial compression of the front side member portions at the time of a frontal impact can be appropriately performed, so the necessary amount of energy absorption can be ensured.

A vehicle front portion structure pertaining to a second embodiment of the disclosure is the configuration of the first aspect, in which the first cover member covers curved portions of the upper member portions from a vehicle upper side.

In the vehicle front portion structure pertaining to the second aspect of the disclosure, the first cover member covers the curved portions of the upper member portions from the vehicle upper side, so a reaction force to the bending moment applied to the curved portions of the upper member portions can be obtained.

A vehicle front portion structure pertaining to a third aspect of the disclosure is the configuration of the second aspect, in which the first cover member covers the suspension tower portions and is secured to the suspension tower portions.

In the vehicle front portion structure pertaining to the third aspect of the disclosure, the first cover member covers the suspension tower portions and is secured to the suspension tower portions, so a reaction force to the bending moment applied to the curved portions of the upper member portions can be obtained by the suspension tower portions that are members with a high yield strength.

A vehicle front portion structure pertaining to a fourth aspect is the configuration of any of the first aspect to the third aspect, in which the frame body portion includes a cross portion that extends in the vehicle width direction at front side of the frame body portion and the cross portion has bent portions that are bent inwardly in the vehicle width direction, and the first cover member extends to the bent portions and is secured to the cross portion.

In the vehicle front portion structure pertaining to the fourth aspect of the disclosure, the first cover member extends to the bent portions of the frame body portion and is secured to the cross portion, so deformation and brake of the frame body portion at the time of a frontal impact can be inhibited. Furthermore, even when the cross portion is broken at the time of a frontal impact, lifting of the frame body portion can be inhibited because the first cover member has the action of drawing the frame body portion in the vehicle downward direction.

A vehicle front portion structure pertaining to a fifth aspect of the disclosure is the configuration of any of the second aspect to the fourth aspect, in which the vehicle front portion structure includes second cover members that extend in the vehicle front-rear direction and cover outer side surfaces, in the vehicle width direction, of the upper member portions, and the second cover members are secured to the frame body portion.

In the vehicle front portion structure pertaining to the fifth aspect of the disclosure, the second cover members cover the outer side surfaces of the upper member portions, so deformation or brake of the side surfaces of the upper member portions can be inhibited.

A vehicle front portion structure pertaining to a sixth aspect of the disclosure is the configuration of the fifth aspect, in which the second cover members are formed integrally with the first cover member.

In the vehicle front portion structure pertaining to the sixth aspect of the disclosure, the first cover member and the second cover members are integrally formed, so the number of parts can be reduced.

A vehicle front portion structure pertaining to a seventh aspect of the disclosure is the configuration of any of the third aspect to the sixth aspect, in which the vehicle front portion structure includes a suspension tower bar that interconnects the left and right pair of suspension tower portions in the vehicle width direction, and the first cover member has a securing portion that is secured to the suspension tower bar.

In the vehicle front portion structure pertaining to the seventh aspect of the disclosure, the securing portion of the first cover member is secured to the suspension tower bar, so more of a reaction force to the bending moment applied to the curved portions of the upper member portions is obtained, and load transferability at the time of a small overlap crash can be improved.

A vehicle front portion structure pertaining to an eighth aspect of the disclosure is the configuration of any of the second aspect to the seventh aspect, in which the vehicle front portion structure includes a cowl portion that interconnects the left and right pair of upper member portions in the vehicle width direction, and the vehicle front portion structure has load transfer portions that interconnect the cowl portion and the first cover member in the vehicle front-rear direction.

In the vehicle front portion structure pertaining to the eighth aspect of the disclosure, the cowl portion and the first cover member are interconnected by the load transfer portions, so a reaction force to the bending moment applied to the curved portions of the upper member portions can be obtained also from the cowl portion via the load transfer portions. Furthermore, at the time of a frontal impact, the load from the front can be transferred via the load transfer portions to the cowl portion.

A vehicle front portion structure pertaining to a ninth aspect of the disclosure is the configuration of any of the first aspect to the eighth aspect, in which the first cover member is configured by a member that has a higher ductility than the frame body portion.

In the vehicle front portion structure pertaining to the ninth aspect of the disclosure, the first cover member is configured by a member that has a higher ductility than the frame body portion, so even if the frame body portion becomes deformed or is broken at the time of a frontal impact, the bending load in the vehicle front-rear direction can be carried by the first cover member.

As described above, the vehicle front portion structure pertaining to the disclosure can ensure the necessary amount of energy absorption.

### BRIEF DESCRIPTION OF THE DRAWINGS

FIG. 1 is a perspective view schematically showing an example of a vehicle front portion structure pertaining to a first embodiment of the disclosure;
FIG. 2 is a perspective view schematically showing an example of a frame body portion of the vehicle front portion structure of FIG. 1;
FIG. 3 is a plan view schematically showing the frame body portion of FIG. 1;
FIG. 4 is a plan view schematically showing the vehicle front portion structure of FIG. 1;
FIG. 5 is a perspective view of main portions including a cover member as viewed from a vehicle width direction outer side;
FIG. 6 is a perspective view of the area inside dashed-line frame A of FIG. 4 as viewed obliquely from the vehicle width direction inner side and front side;
FIG. 7 is a perspective view schematically showing an example modification of the vehicle front portion structure of FIG. 1;
FIG. 8 is a side view schematically showing main portions of a vehicle front portion structure pertaining to a second embodiment of the disclosure;
FIG. 9 is a side view schematically showing main portions of a vehicle front portion structure pertaining to a third embodiment of the disclosure;
FIG. 10 is a perspective view schematically showing an example of a vehicle front portion structure pertaining to a fourth embodiment of the disclosure;
FIG. 11 is a perspective view of a frame body portion of a vehicle front portion structure pertaining to a fifth embodiment of the disclosure as viewed obliquely from the left rear;
FIG. 12 is a plan view schematically showing main portions of the vehicle front portion structure including a frame body portion of FIG. 11; and
FIG. 13 is a plan view schematically showing main portions of a vehicle front portion structure pertaining to a sixth embodiment of the disclosure.

### DETAILED DESCRIPTION

### <First Embodiment>

A vehicle front portion structure 10 pertaining to a first embodiment of the disclosure will be described below using the drawings. It will be noted that redundant description of constituent elements having substantially identical functional configurations will be omitted by assigning identical reference signs thereto. Furthermore, arrow FR shown as appropriate in the drawings indicates a forward direction in the vehicle front-rear direction, and arrow UP indicates an upward direction in the vehicle up-down direction. Arrow LH indicates a leftward direction in the vehicle width direction and in this embodiment indicates an outward direction in the vehicle width direction. When description is given below simply using the directions of front/rear, upper/lower, and left/right, unless otherwise indicated these will mean front/rear in the vehicle front-rear direction, upper/lower in the vehicle up-down direction, and left/right in the vehicle left-right direction (vehicle width direction).

### (Schematic Configuration of Vehicle Front Portion)

First, the configuration of the vehicle front portion structure 10 will be described as an example of a vehicle front portion structure pertaining to the first embodiment of the disclosure. The vehicle to which the vehicle front portion structure 10 is applied is, as an example, a battery electric vehicle (BEV), a fuel cell electrical vehicle (FCEV), a hybrid electric vehicle (HEV), or a plug-in hybrid electric vehicle (PHEV), which run on power generated by a power unit.

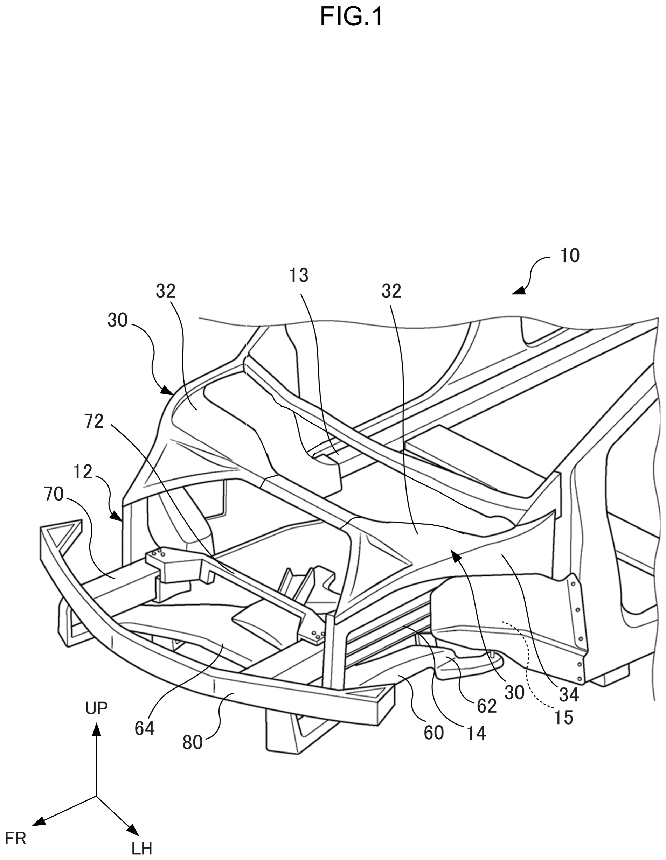

FIG. 1 is a perspective view schematically showing an example of the vehicle front portion structure 10 pertaining to the first embodiment. In FIG. 1, main portions of a frame of the front portion of the vehicle are schematically shown. As shown in FIG. 1, the front portion of the vehicle is provided with the vehicle front portion structure 10 serving as a frame portion of the vehicle. The vehicle front portion structure 10 includes, as an example, a frame body portion 12, cover members 30 serving as a first cover member, crash boxes 70, a suspension members 60, and a bumper reinforcement 80 (hereinafter called "the bumper RF 80").

### (Configuration of Frame Body Portion 12)

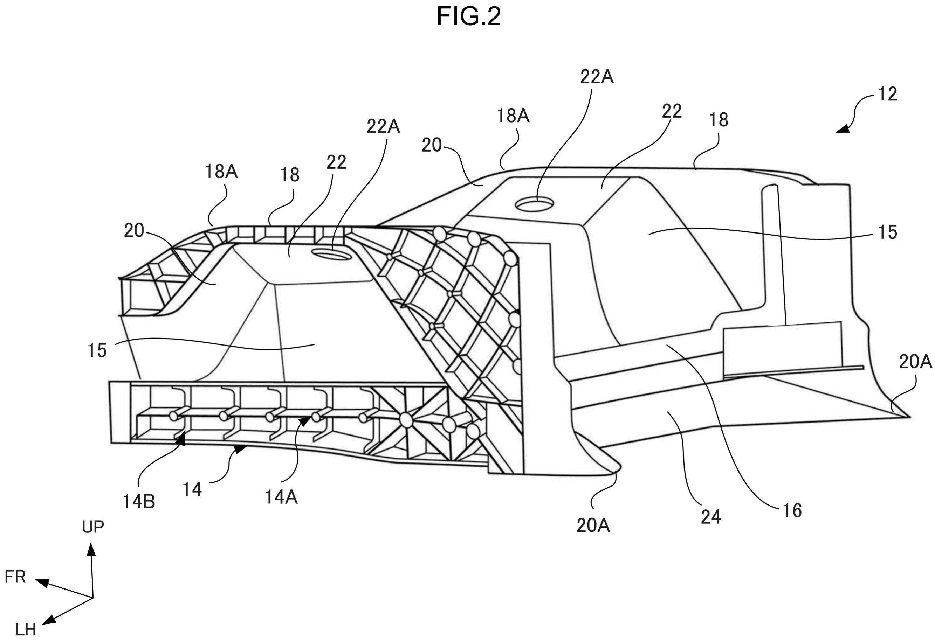

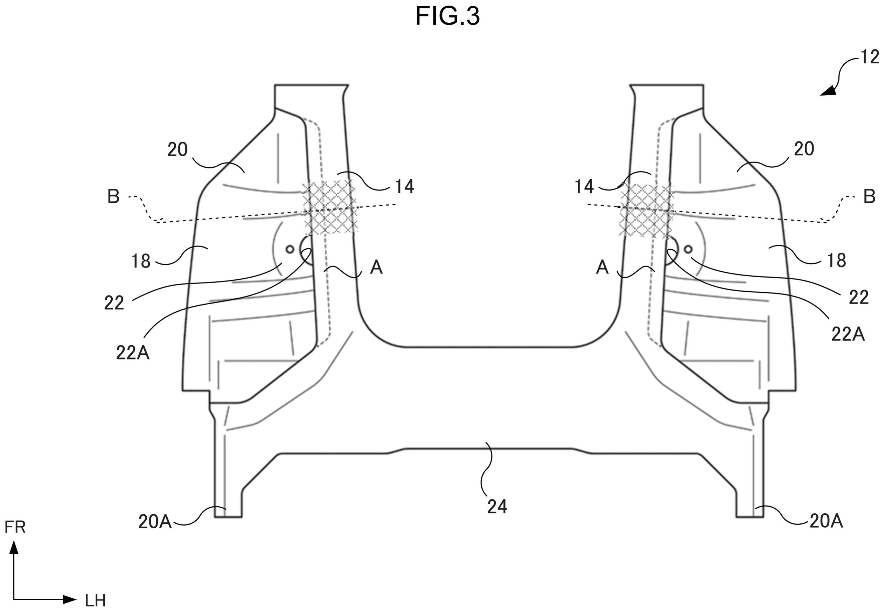

FIG. 2 is a perspective view schematically showing an example of the frame body portion 12 of the vehicle front portion structure 10 of FIG. 1 and is a perspective view as viewed from the left rear side. Furthermore, FIG. 3 is a plan view schematically showing an example of the frame body portion 12 of the vehicle front portion structure 10 of FIG. 1. As shown in FIG. 1 to FIG. 3, the frame body portion 12 includes a left and right pair of front side member portions 14 that are front frame members of the vehicle and are disposed on both sides, in the width direction, of the vehicle front portion. The front side member portions 14 extend in the front-rear direction, and the rear end portions of the front side member portions 14 are connected to a crossmember portion 16. Furthermore, the front end portions of the front side member portions 14 are connected to the crash boxes 70.

On outer sides, in the width direction, of the pair of front side member portions 14 are provided wheel well portions 15 in which tires serving as wheels (not shown in the drawings) are disposed, and the left and right wheel well portions 15 are interconnected by the crossmember portion 16. The front side member portions 14 are provided on extension lines of side members (not shown in the drawings) configuring frames on the lower portion side of the vehicle in the wheel well portions 15.

On outer sides, in the width direction, and upper sides, in the up-down direction of the left and right front side member portions 14 are disposed apron upper member portions 18 serving as upper member portions. The apron upper member portions 18 are frame members configuring frames on the upper sides of the vehicle front portion structure 10 and, like the front side member portions, extend in the front-rear direction. The apron upper member portions 18 are disposed on the upper sides of the front side member portions 14 as viewed in a vehicle side view and include curved portions 18A that are curved downwardly at the front side. The curved portions 18A will be described in detail further below.

The front side member portions 14 and the apron upper member portions 18 have, as an example, substantially rectangular open cross-sectional shapes in which openings are provided on their outer sides in the width direction, i.e., substantially rectangular cross-sectional shapes that open outward in the width direction. The front side member portions 14 each include, as an example, a horizontal rib 14A that extends in the front-rear direction and a plurality of vertical ribs 14B that extend in the up-down direction in the open cross section at outer side in the width direction. An impact absorption structure that absorbs energy at the time of an impact is configured by the horizontal rib 14A and the vertical ribs 14B. It will be noted that the impact absorption structure is not limited to the structure shown in FIG. 2 and that a publicly known structure can be used. Furthermore, the apron upper member portions 18 each include, as an example, an impact absorption structure substantially like that of the front side member portions 14.

Furthermore, a left and right pair of fender apron portions 20 are disposed at outer sides, in the width direction, of the front side member portions 14 and at inner sides, in the width direction, of the apron upper member portions 18. The upper ends of the fender apron portions 20 are joined to the apron upper member portions 18, the lower ends of the fender apron portions 20 are joined to the front side member portions 14, and suspension tower portions 22 and the wheel well portions 15 are integrally formed. The suspension tower portions 22 are provided at upper sides and at the outer sides in the width direction of the front side member portions 14, and the vehicle lower sides of the suspension tower portions 22 are joined to the fender apron portions 20. The upper end surfaces of the suspension tower portions 22 are provided with through holes 22A in which upper ends of suspensions (not shown in the drawings) are disposed. The fender apron portions 20 are formed bulging inward in the width direction, and these bulging portions form the wheel well portions 15 in which the tires (not shown in the drawings) are steerably housed.

Furthermore, a dash panel portion 24 is disposed at a rear side of the front side member portions 14 and between the left and right pair of front side member portions 14. The dash panel portion 24 is a member that partitions the space in which the power unit is housed (not shown in the drawings) from the cabin (not shown in the drawings) and extends in the width direction and in the up-down direction with its thickness direction coinciding with the front-rear direction. The width direction end portions of the dash panel portion 24 are connected to the fender apron portions 20, and the upper end portion of the dash panel portion 24 is connected to the crossmember portion 16.

Rear end portions 20A of the fender apron portions 20 located at rear sides of the wheel well portions 15 extend along the front-rear direction and are connected to rockers 13 (see FIG. 1) that configure frames of vehicle body side portions.

The suspension tower portions 22 are provided projecting in substantially tubular shapes in the upward direction from the wheel well portions 15 of the fender apron portions 20. Inside the suspension tower portions 22 are housed shock absorbers and springs configuring suspensions (not shown in the drawings) that support the tires serving as front wheels housed in the wheel well portions 15.

Furthermore, the frame body portion 12 of this embodiment includes, as an example, the left and right pair of front side member portions 14, the left and right pair of wheel well portions 15, the crossmember portion 16, the left and right pair of apron upper member portions 18, the left and right pair of fender apron portions 20, the left and right pair of suspension tower portions 22, and the dash panel portion 24 shown in FIG. 2 and is integrally formed by casting using an aluminum alloy or a magnesium alloy for example as the material. Each of the members including the front side member portions 14, the wheel well portions 15, the crossmember portion 16, the apron upper member portions 18, and the suspension tower portions 22 have an open cross section that opens in the removal direction of the mold during casting.

It will be noted that in this embodiment one side and the other side in the width direction can be used for the removal direction of the mold. Consequently, the cross section of each member is an open cross section that opens to at least one of the outer side and the inner side in the width direction. It will be noted that although FIG. 1 does not show the outer side (left side) of the left wheel well portion 15, it is actually open as shown in FIG. 2. It will be noted that the left and right halves of the frame body portion 12 may each be integrally formed.

### (Crash Boxes 70 and Bumper RF 80)

The crash boxes 70 have closed cross-sectional shapes and, as an example, are formed by aluminum extrusion. The rear ends of the crash boxes 70 are joined to the front ends of the left and right pair of front side member portions 14, and the front ends of the crash boxes 70 are joined to the bumper RF 80. The bumper RF 80 is a hollow beam-like frame portion and extends along the width direction. The bumper RF 80 is connected in a state in which its width direction outer end portions project outward in the width direction beyond the front end portions of the crash boxes 70. Furthermore, the bumper RF 80 is gently curved so that its width direction intermediate portion projects in the vehicle forward direction as viewed in a plan view.

In this embodiment, as an example, the crash boxes 70 and the bumper RF 80 are integrally formed. It will be noted that although in this embodiment the crash boxes 70 are described as parts integrated with the bumper RF 80, the crash boxes 70 and the bumper RF 80 may be separate. Furthermore, the joint portions between the front end portions of the front side member portions 14 and the crash boxes 70 are bridged by a joint cross portion 72 extending in the width direction.

### (Suspension Member 60)

As shown in FIG. 1, the suspension member 60 includes a pair of side rails 62 that extend in the front-rear direction and are spaced apart from each other in the width direction and a front crossmember 64 that interconnects the front end portions of the pair of side rails 62 in the width direction. Furthermore, the suspension member 60 is configured to include a rear crossmember (not shown in the drawings) that interconnects the rear portions of the pair of side rails 62 in the width direction. As an example, the pair of side rails 62, the front crossmember 64, and the rear crossmember of the suspension member 60 are integrally formed, and each has a substantially E-shaped open cross section that opens in the downward direction. The suspension member 60 can be formed by casting using a mold whose removal direction is in the up-down direction. It will be noted that it is not essential to integrally form the suspension member 60. The front end portion and the rear end portion of the suspension member 60 are attached at their end portions, in the width direction, to the front side member portions 14.

### (Cover Members 30)

As shown in FIG. 1, the cover members 30 cover the upper surfaces of the apron upper member portions 18 along the front-rear direction. Here, brake origin points B of the apron upper member portions 18 will be described. In the frame body portion 12 configured as described above, at the time of a frontal impact, the impact load transmitted from the front is input via the crash boxes 70 to the front side member portions 14 and is absorbed by the impact absorption structures of the front side member portions 14.

However, as shown in FIG. 2, since the apron upper member portions 18 include the curved portions 18A that are curved in the downward direction on their front sides, at the time of a frontal impact the load can be drawn downward at the curved portions 18A. It will be noted that although in this embodiment the apron upper member portions 18 include the curved portions 18A, the apron upper member portions 18 are not limited to including the curved portions 18A and may include inclined portions that have an inclination. In this way, because the load is drawn downward at the curved portions 18A, a bending moment in which the entire frame body portion 12 rotates about an axis along the width direction, i.e., a moment in a direction that offsets a mode in which the entire frame body portion 12 is lifted up, can be generated. However, at the time of a frontal impact, the frame body portion 12 may be broken before the impact absorption structures of the front side member portions 14 are appropriately axially compressed, and if the frame body portion 12 is broken, a mode in which the entire frame body portion 12 is lifted up is promoted.

If the front sides of the front side member portions 14 rotates in the upward direction due to such brake deformation, there is the potential for the surface of the front side member portions 14 that produces an impact absorption reaction force to no longer be parallel to the load input surface, i.e., the axial direction of the crash boxes 70, so that the impact absorption performance resulting from axial compression of the front side member portions 14 is reduced.

The frame body portion 12 has the brake origin points B that become origin points for deformation and brake at the time of a frontal impact. As shown in FIG. 3, the brake origin points B are at the front end portions of the suspension tower portions 22. Usually, the suspension tower portions 22 are relatively large portions in the frame body portion 12, so they are configured to have a high yield strength with respect to bending. For that reason, in the frame body portion 12, the front end portions of the suspension tower portions 22 are considered to have a high potential to become brake origin points.

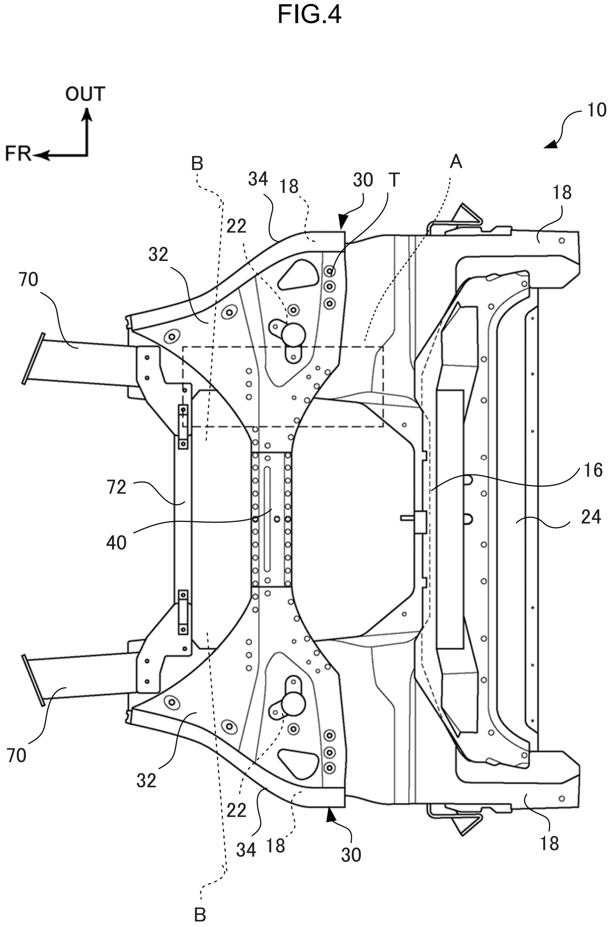

Thus, in the vehicle front portion structure 10 of this embodiment, the brake origin points B are covered by the cover members 30. FIG. 4 is a plan view schematically showing the vehicle front portion structure 10 of FIG. 1. The cover members 30 are formed by platelike member as an example and, as shown in FIG. 1 and FIG. 4, are disposed at left and right sides in the width direction. The cover members 30 are configured by a member that has a higher ductility than the frame body portion 12.

The cover members 30 include cover body portions 32 formed in substantially triangular shapes at both sides in the width direction. The cover body portions 32 are disposed such that their base end portions located at outer sides in the width direction in plan view overlapping with the upper ends of the apron upper member portions 18 and are disposed such that the apex sides located at inner sides in the width direction in plan view overlapping with a suspension tower bar 40 described below. In this embodiment, the cover body portions 32 are, as an example, formed so as to cover the curved portions 18A of the apron upper member portions 18 from the upper side. In the cover body portions 32 are formed recesses and projections matching recesses and projections at the upper surface of the frame body portion 12.

Furthermore, the cover body portions 32 are disposed so as to cover the brake origin points B (see FIG. 3) in the front-rear direction. In other words, the cover body portions 32 extend in the forward direction and the rearward direction across the front end portions of the suspension tower portions 22 in the front-rear direction as viewed in a top view. Furthermore, the cover body portions 32 are, as an example, formed so as to cover the suspension tower portions 22. It will be noted that although in this embodiment the cover members 30 are formed so as to cover the suspension tower portions 22, the disclosure is not limited to this. As indicated by the hatched regions in FIG. 3, the cover members 30 need only cover at least ranges including the brake origin points B at the upper end surfaces of the apron upper member portions 18.

The cover body portions 32 are secured by fastening portions T to the suspension tower portions 22. As the method of securing the cover body portions 32 at the fastening portions T, fastening using bolts or rivets can be applied.

Furthermore, the cover members 30 include side surface cover portions 34 serving as second cover members, and the side surface cover portions 34 are formed integrally with the cover body portions 32. It will be noted that although in this embodiment the side surface cover portions 34 are formed integrally with the cover body portions 32, they may also be formed separate from the cover body portions 32.

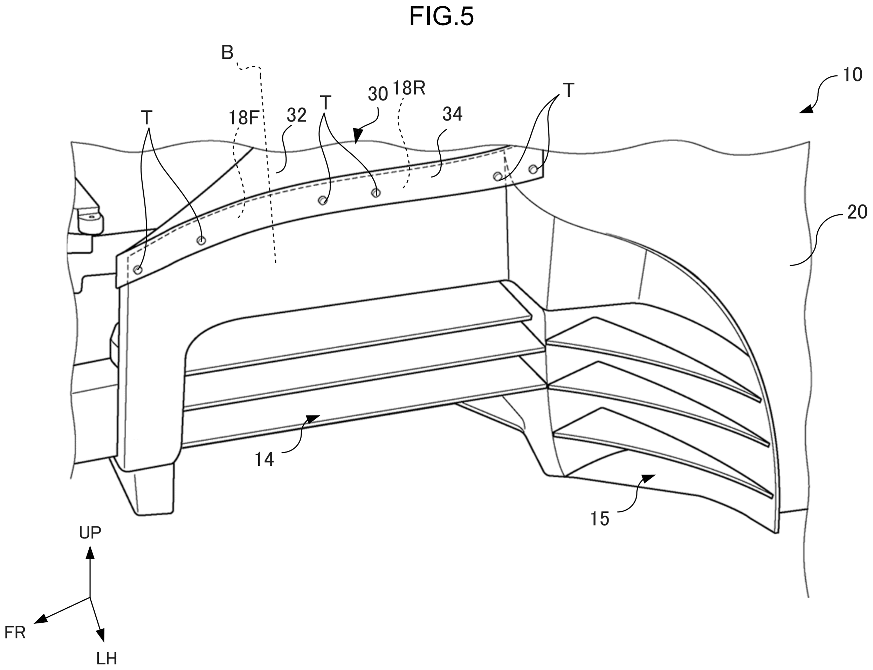

FIG. 5 is a perspective view of main portions including the cover member 30 as viewed from outer side in the width direction. As shown in FIG. 5, the side surface cover portions 34 extend in the downward direction from the outer end portions, in the width direction, of the cover body portions 32 and extend in the front-rear direction. The side surface cover portions 34 are disposed so as to cover the width direction outer side surfaces of the apron upper member portions 18 (see FIG. 1). The side surface cover portions 34 are secured by fastening portions T to the frame body portion 12. In this embodiment, as an example, the side surface cover portions 34 are secured to the apron upper member portions 18. Furthermore, as shown in FIG. 5, the fastening portions T are disposed on both sides, in the front-rear direction, of the brake origin points B.

In other words, as shown in FIG. 5, the side surface cover portions 34 are secured to front portions 18F of the apron upper member portions 18, the front portions 18F each is positioned further toward a front side than a position overlapping with the suspension tower portion 22 in the front-rear direction (i.e., the brake origin points B), and the side surface cover portions 34 are secured to rear portions 18R of the apron upper member portions 18, the rear portions 18R each is located at a position overlapping with the suspension tower portion 22 in the front-rear direction as viewed in a vehicle side view (see FIG. 5).

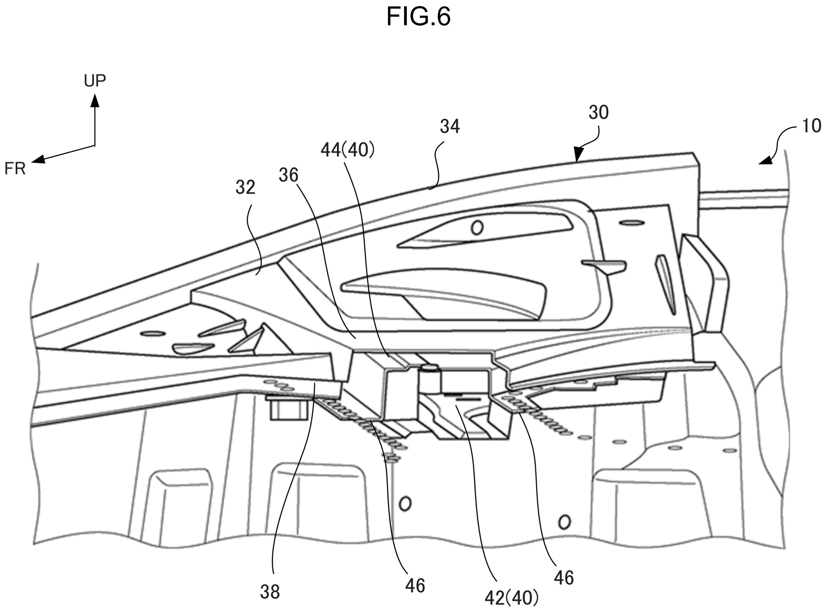

FIG. 6 is a perspective view of the area inside the dashed-line frame A of FIG. 4 as viewed obliquely from the width direction inner side and the front side. As shown in FIG. 4, the frame body portion 12 includes a suspension tower bar 40 that interconnects the left and right pair of suspension tower portions 22 in the width direction. As shown in FIG. 6, the suspension tower bar 40 includes, as an example, a lower member 42 that is positioned on the lower side and has a rectangular open cross-sectional shape that opens in the upward direction and an upper member 44 that is positioned on the upper side and has a rectangular open cross-sectional shape that opens in the downward direction. As shown in FIG. 4, the suspension tower bar 40 is formed such that it gradually becomes wider from the width direction inner side to outer side toward the suspension tower portions 22.

Furthermore, the upper end of the lower member 42 and the lower end of the upper member 44 include flange portions 46 that are joined to each other in the front-rear direction, and the suspension tower bar 40 is configured as a result of these flange portions 46 being joined together.

The cover body portions 32 have open cross-sectional shapes in which their width direction inner end portions cover the upper portion of the upper member 44. Specifically, as shown in FIG. 6, the width direction inner end portions of the cover body portions 32 are each formed in the shape of a hat that opens downward. As shown in FIG. 6, the cover body portions 32 are, as an example, formed such that they gradually become wider from the width direction inner sides to outer sides. The cover body portions 32 have lower surface portions 38 that are a level lower than upper portions 36 that cover the suspension tower bar 40, and the lower surface portions 38 are secured to the flange portions 46. That is, the cover body portions 32 are secured to the suspension tower bar 40 in places where they overlap with the flange portions 46 as viewed in a top view. It will be noted that the lower surface portions 38 correspond to securing portions.

### (Action and Effects)

Next, the action and effects of the first embodiment will be described.

In the frame body portion 12 integrally formed by casting as described above, the apron upper member portions 18 are curved downward, so at the time of a frontal impact for example, a moment in a direction that offsets a mode in which the entire frame body portion 12 is lifted up can be generated. However, at the time of a frontal impact, the frame body portion 12 may be broken before the impact absorption structures of the front side member portions 14 are appropriately axially compressed, and if the frame body portion 12 is broken, a mode in which the entire frame body portion 12 is lifted up is promoted. In a case in which the frame body portion 12 is broken in this way, at the apron upper member portions 18, vicinities of positions corresponding to the front ends of the suspension tower portions 22, as viewed in a vehicle side view, may be brake origin points at the time of a frontal impact.

In the vehicle front portion structure 10 of the first embodiment, the cover members 30 serving as a first cover member are disposed so as to cover each of the left and right pair of apron upper member portions 18 along the front-rear direction. Furthermore, the cover members 30 are secured to the front portions 18F of the apron upper member portions 18 at positions that are further toward a front side than the suspension tower portions 22. The cover members 30 are also secured to the rear portions 18R of the apron upper member portions 18 at positions overlapping with the suspension tower portions 22 as viewed in a vehicle side view. That is, the cover members 30 are secured to the apron upper member portions 18 in the vicinities of positions corresponding to the front ends of the suspension tower portions 22 as viewed in a vehicle side view, i.e., at front side and back side of the brake origin points B at the time of a frontal impact. The cover members 30 cover the portions considered to be the brake origin points B at the time of a frontal impact, so deformation in which the frame body portion 12 projects upward or brake of the frame body portion 12 at the time of a frontal impact can be inhibited. Impact absorption by axial compression of the front side member portions 14 at the time of a frontal impact can be appropriately performed, so the desirable amount of energy absorption can be ensured.

Furthermore, the cover body portions 32 of the cover members 30 cover the curved portions 18A of the apron upper member portions 18 from the vehicle upper side, so a reaction force to the bending moment applied to the curved portions 18A of the apron upper member portions 18 can be obtained by the cover body portions 32.

Furthermore, the cover members 30 cover the suspension tower portions 22 and are secured to the suspension tower portions 22, so a reaction force to the bending moment applied to the curved portions 18A of the apron upper member portions 18 can be obtained by the suspension tower portions 22 that are members with a high yield strength.

Furthermore, the side surface cover portions 34 serving as second cover members cover the outer side surfaces of the apron upper member portions 18, so deformation or brake of the side surfaces of the apron upper member portions 18 can be inhibited.

Furthermore, the side surface cover portions 34 are integrally formed with the cover members 30. That is, the cover body portions 32 and the side surface cover portions 34 are integrally formed, so the number of parts can be reduced.

Furthermore, the lower surface portions 38 serving as securing portions of the cover members 30 are secured to the flange portions 46 of the suspension tower bar 40, so more of a reaction force to the bending moment applied to the curved portions 18A of the apron upper member portions 18 is obtained, and load transferability at the time of a small overlap crash can be improved.

Furthermore, the cover members 30 are configured by members that have a higher ductility than the frame body portion 12, so even if the frame body portion 12 becomes deformed or is broken at the time of a frontal impact, the bending load in the front-rear direction can be carried by the cover members 30.

### <Example Modification>

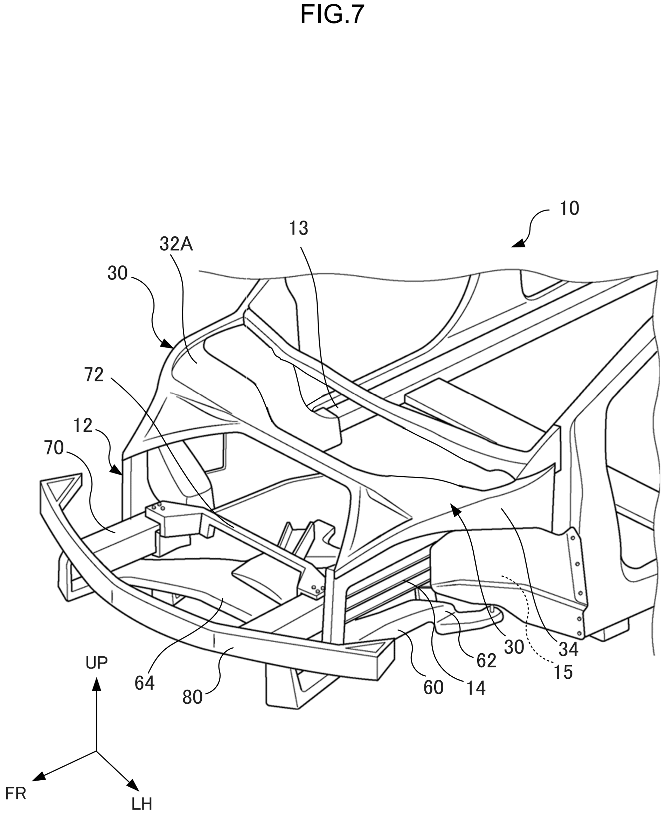

Although in the first embodiment the cover members 30 are provided on both sides in the width direction, the disclosure is not limited to this. FIG. 7 is a perspective view schematically showing an example modification of the vehicle front portion structure 10 of FIG. 1. As shown in FIG. 7, a cover member 30 includes a cover body portion 32A in which the cover body portions 32 provided on both sides in the width direction are interconnected at the width direction center portion of the cover member 30. That is, one cover member 30 is provided in the vehicle front portion structure 10.

By making the cover member 30 singular, the number of parts of the cover member 30 can be reduced.

### <Second Embodiment>

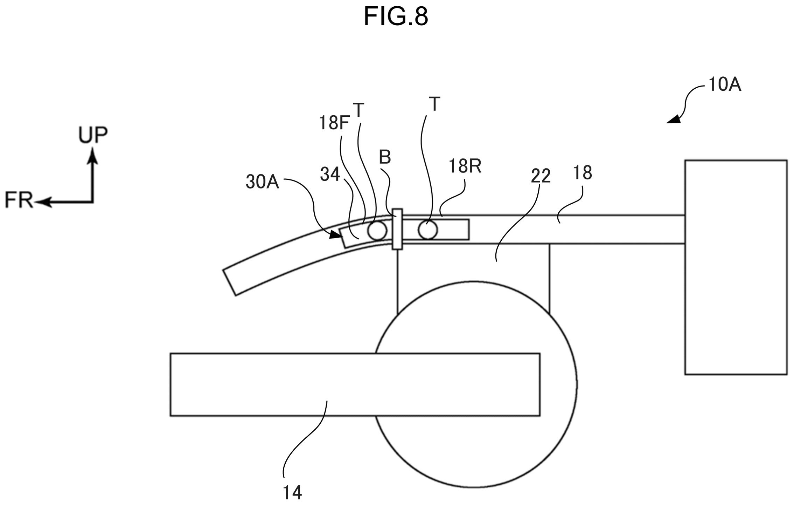

Next, a vehicle front portion structure 10A pertaining to a second embodiment of the disclosure will be described. FIG. 8 is a side view schematically showing main portions of the vehicle front portion structure 10A pertaining to the second embodiment. It will be noted that in the vehicle front portion structure 10A, constituent parts identical to those in the description of the first embodiment are assigned identical numbers, and description thereof will be omitted.

As shown in FIG. 8, the vehicle front portion structure 10A of the second embodiment includes cover members 30A. Whereas the cover members 30 of the vehicle front portion structure 10 of the first embodiment include the cover body portions 32 that cover the upper end surfaces of the apron upper member portions 18 and the side surface cover portions 34 that cover the outer side surfaces of the apron upper member portions 18, the cover members 30A serving as a first cover member of the second embodiment include the side surface cover portions 34 that cover the outer side surfaces of the apron upper member portions 18.

It will be noted that the method of securing the side surface cover portions 34 to the apron upper member portions 18 is the same as the securing method described with reference to FIG. 5 in the first embodiment. That is, the side surface cover portions 34 of the cover members 30A are secured from the width direction outer side surface sides to the front portions 18F of the apron upper member portions 18 positioned further toward a front side than positions overlapping with the suspension tower portions 22 in the front-rear direction (i.e., the brake origin points B) and to the rear portions 18R of the apron upper member portions 18 at positions overlapping with the suspension tower portions 22 as viewed in a vehicle side view.

### (Action and Effects)

Next, the action and effects of the second embodiment will be described.

In the vehicle front portion structure 10A pertaining to the second embodiment, the cover members 30A serving as a first cover member are configured by the side surface cover portions 34, so the outer side surfaces of the apron upper member portions 18 are covered by the side surface cover portions 34. Even when the outer side surfaces of the apron upper member portions 18 are covered by the cover members 30A in this way, the apron upper member portions 18 can be reinforced. That is, the cover members 30A cover the outer side surfaces of the portions of the apron upper member portions 18 which are considered to be the brake origin points B at the time of a frontal impact, so brake and deformation of the outer side surfaces of the apron upper member portions 18 can be inhibited.

### (Third Embodiment)

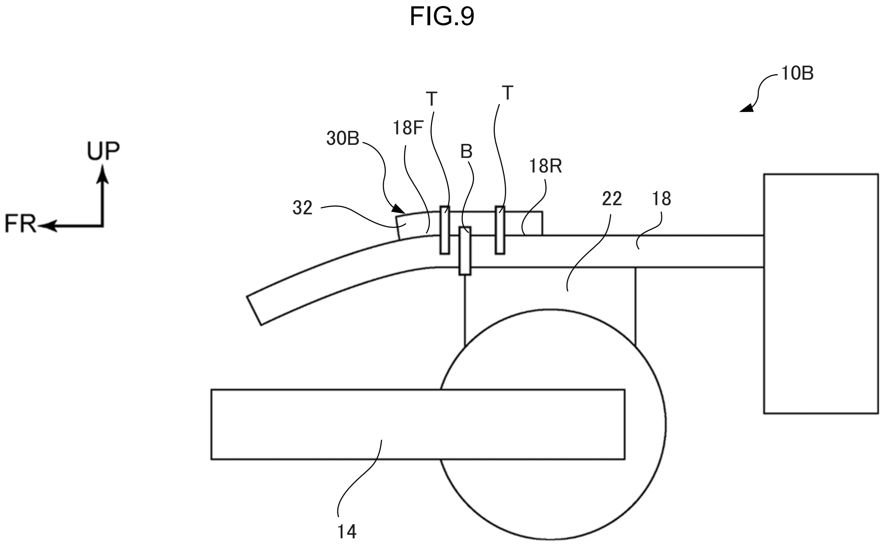

Next, a vehicle front portion structure 10B pertaining to a third embodiment of the disclosure will be described. FIG. 9 is a side view schematically showing main portions of the vehicle front portion structure 10B pertaining to the third embodiment. It will be noted that in the vehicle front portion structure 10B, constituent parts identical to those in the description of the first embodiment are assigned identical numbers, and description thereof will be omitted.

As shown in FIG. 9, the vehicle front portion structure 10B of the third embodiment includes cover members 30B. Whereas the cover members 30 of the vehicle front portion structure 10 of the first embodiment include the cover body portions 32 that cover the upper end surfaces of the apron upper member portions 18 and the side surface cover portions 34 that cover the outer side surfaces of the apron upper member portions 18, the cover members 30B serving as a first cover member of the third embodiment include the cover body portions 32 that cover the upper end surfaces of the apron upper member portions 18.

The cover body portions 32 of the cover members 30B are secured from the vehicle upper side to the front portions 18F of the apron upper member portions 18 that are further toward a front side than positions overlapping with the suspension tower portions 22 (i.e., the brake origin points B) as viewed in a vehicle side view. The cover body portions 32 are also secured to the rear portions 18R of the apron upper member portions 18 located at positions overlapping with the suspension tower portions 22.

### (Action and Effects)

Next, the action and effects of the third embodiment will be described.

In the vehicle front portion structure 10B pertaining to the third embodiment, the cover members 30B serving as a first cover members are configured by the cover body portions 32, so the upper end surfaces of the apron upper member portions 18 are covered by the cover body portions 32. Even when the upper end surfaces of the apron upper member portions 18 are covered by the cover members 30B without the outer side surfaces being covered in this way, the apron upper member portions 18 can be reinforced. That is, the cover members 30B cover the upper end surfaces of the portions of the apron upper member portions 18 that are considered to be the brake origin points B at the time of a frontal impact, so brake and deformation of the upper end surfaces of the apron upper member portions 18 can be inhibited.

### <Fourth Embodiment>

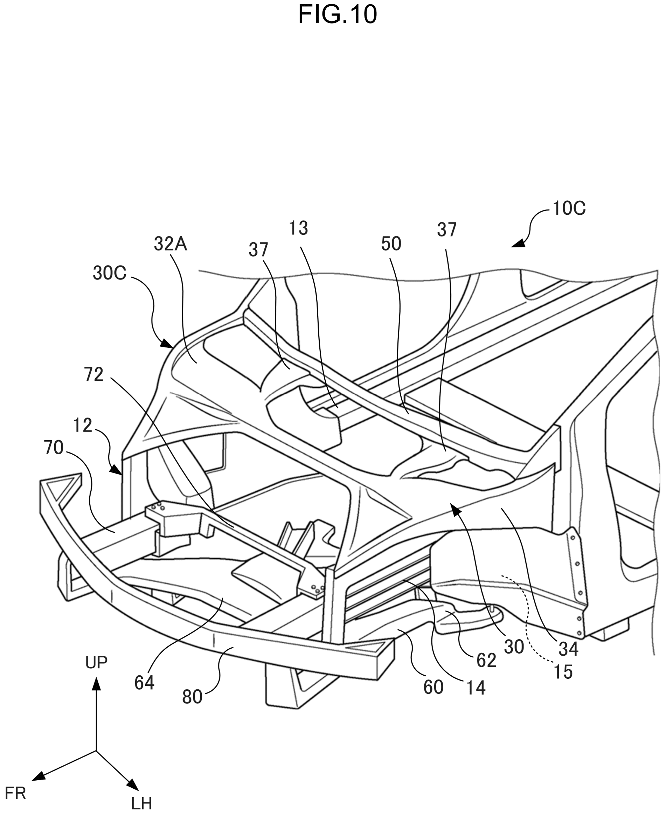

Next, a vehicle front portion structure 10C pertaining to a fourth embodiment of the disclosure will be described. FIG. 10 is a perspective view schematically showing an example of the vehicle front portion structure 10C of the fourth embodiment. It will be noted that in the vehicle front portion structure 10C, constituent parts identical to those in the description of the first embodiment are assigned identical numbers, and description thereof will be omitted.

As shown in FIG. 10, the vehicle front portion structure 10C of the fourth embodiment includes a cowl portion 50 that interconnects the left and right pair of apron upper member portions 18 in the width direction at the upper rear end portion of the frame body portion 12.

A cover member 30C serving as a first cover member of this embodiment includes, as in the example modification of the vehicle front portion structure 10 of the first embodiment, cover body portions 32A provided on both sides in the width direction are interconnected at the width direction center portion of the cover member 30C. That is, one cover member 30C is provided in the vehicle front portion structure 10. The cover member 30C also includes two load transfer portions 37 that interconnect the cowl portion 50 and the cover body portions 32A in the front-rear direction. The load transfer portions 37 are provided on both sides in the width direction at the vicinities of boundaries between the substantially triangular portions of the cover body portions 32A and the linear portion that covers the suspension tower bar 40. The load transfer portions 37 are, as an example, formed such that they become wider in the width direction from the cover body portions 32A to the cowl portion 50. Furthermore, the load transfer portions 37 are formed integrally with the cover body portions 32A.

### (Action and Effects)

Next, the action and effects of the fourth embodiment will be described.

In the vehicle front portion structure 10C pertaining to the fourth embodiment, the cowl portion 50 and the cover body portion 32A are interconnected by the load transfer portions 37, so a reaction force to the bending moment applied to the curved portions 18A of the apron upper member portions 18 can be obtained also from the cowl portion 50 via the load transfer portions 37. Furthermore, at the time of a frontal impact, the load from the front can be transmitted via the load transfer portions 37 to the cowl portion 50.

### <Fifth Embodiment>

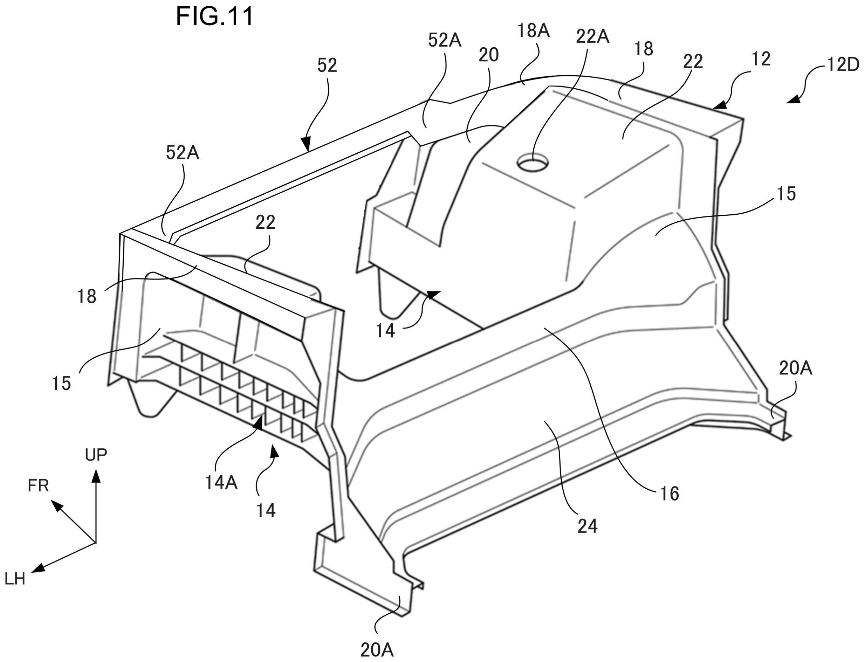

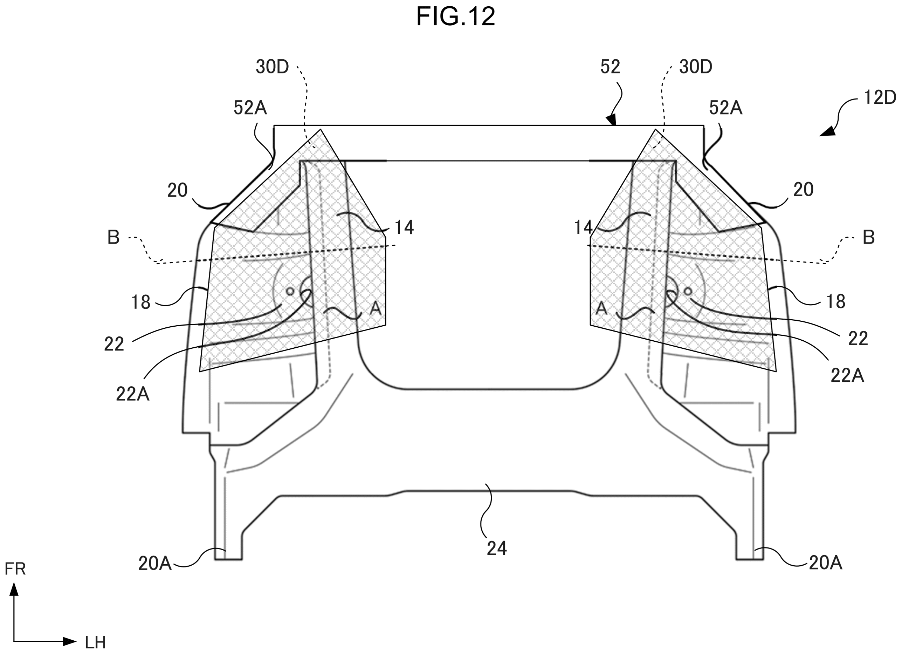

Next, a vehicle front portion structure 10D pertaining to a fifth embodiment of the disclosure will be described. FIG. 11 is a perspective view of a frame body portion 12D of the vehicle front portion structure 10D of the fifth embodiment as viewed obliquely from the left rear, and FIG. 12 is a plan view schematically showing main portions of the vehicle front portion structure 10D including the frame body portion 12D of FIG. 11. The frame body portion 12D of the vehicle front portion structure 10D of the fifth embodiment further includes a cross portion 52 with respect to the frame body portion 12 of the first embodiment. As shown in FIG. 11, the cross portion 52 extends on the front side of the frame body portion 12D and includes bent portions 52A that are bent inward in the width direction. The cross portion 52 extends in the width direction between the bent portions 52A.

As shown in FIG. 12, cover members 30D of this embodiment extend to the bent portions 52A. In this embodiment, as an example, the portions of the cover members 30D that cover the bent portions 52A are secured from above to the cross portion 52. It will be noted that the cover members 30D have an uneven shape matching the unevenness in the upper end surfaces of the frame body portion 12 and the cross portion 52.

### (Action and Effects)

Next, the action and effects of the fifth embodiment will be described.

In the vehicle front portion structure 10D pertaining to the fifth embodiment, the cover members 30D serving as a first cover member extend to the bent portions 52A of the frame body portion 12D and are secured to the cross portion 52, so deformation and brake of the frame body portion 12D at the time of a frontal impact can be inhibited. Furthermore, even when the cross portion 52 is broken at the time of a frontal impact, lifting of the frame body portion 12D can be inhibited because the cover members 30D have the action of drawing the frame body portion 12D in the vehicle downward direction.

### <Sixth Embodiment>

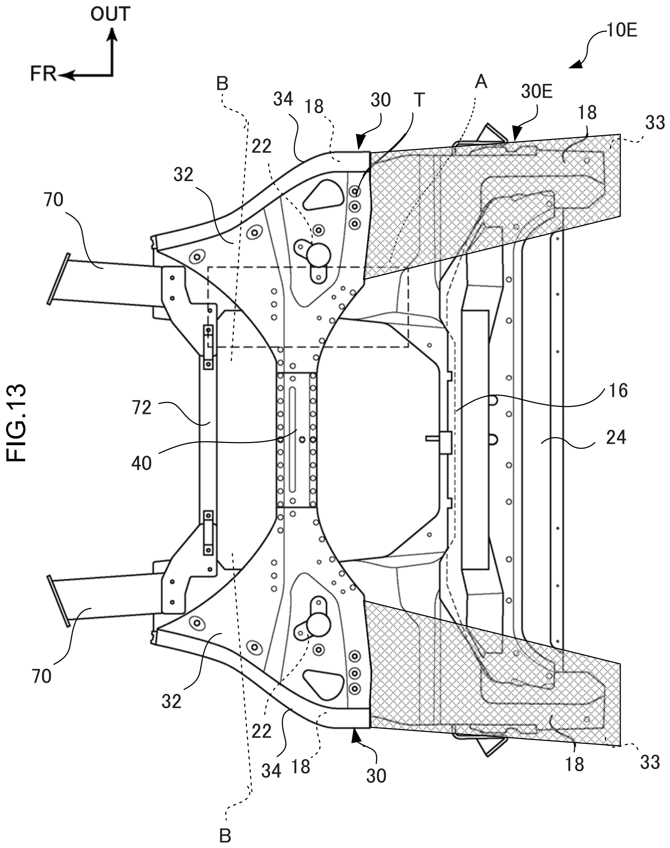

Next, a vehicle front portion structure 10E pertaining to a sixth embodiment of the disclosure will be described. FIG. 13 is a plan view schematically showing main portions of the vehicle front portion structure 10E of the sixth embodiment. Cover members 30E serving as s first cover member of the vehicle front portion structure 10E further include extension portions 33 with respect to the cover members 30 of the first embodiment. The extension portions 33 extend in the vehicle rearward direction from both width direction rear end portions of the cover members 30, and rear ends thereof extend to attachment portions to A-pillars (not shown in the drawings).

### (Action and Effects)

Next, the action of the sixth embodiment will be described.

In the vehicle front portion structure 10E pertaining to the sixth embodiment, the cover members 30E extend to attachment portions to A-pillars, so the cover members 30E cover the attachment portions, whereby a situation where the apron upper member portions 18 bend in such a way as to project upward and the A-pillars move backward (deform) can be prevented.

Furthermore, the configuration of the disclosure is not limited to the above embodiments and can be changed as appropriate as long as the technical problem of the disclosure can be solved.

## Claims

1. A vehicle front portion structure (10, 10A, 10B, 10C, 10D, 10E) comprising:
a frame body portion (12) integrally formed to include:
a left and right pair of front side member portions (14) that extend in a vehicle front-rear direction,
a left and right pair of upper member portions (18) that are disposed at upper sides of the front side member portions (14) and that are curved or inclined in a vehicle downward direction as viewed in a vehicle side view, and
a left and right pair of suspension tower portions (22) that are disposed further toward an inner side in a vehicle width direction than the upper member portions (18); and
a first cover member (30) disposed so as to cover each of the left and right pair of upper member portions (18) along the vehicle front-rear direction, the first cover member (30) being secured to positions of the upper member portions (18) that are further toward a front side than portions of the upper member portions (18) overlapping with the suspension tower portions (22) in the vehicle front-rear direction, and the first cover member (30) being secured to positions of the upper member portions (18) overlapping with the suspension tower portions (22) in the vehicle front-rear direction as viewed in a vehicle side view.

2. The vehicle front portion structure (10, 10A, 10B, 10C, 10D, 10E) according to claim 1, wherein the first cover member (30) covers curved portions (18A) of the upper member portions (18) from a vehicle upper side.

3. The vehicle front portion structure (10, 10A, 10B, 10C, 10D, 10E) according to claim 2, wherein the first cover member (30) covers the suspension tower portions (22) and is secured to the suspension tower portions (22).

4. The vehicle front portion structure (10D) according to claim 1, wherein:
the frame body portion (12) includes a cross portion (52) that extends in the vehicle width direction at a front side of the frame body portion (12) and the frame body portion (12) has bent portions (52A) that are bent inwardly in the vehicle width direction, and
the first cover member (30) extends to the bent portions (52A) and is secured to the cross portion (52).

5. The vehicle front portion structure (10, 10A, 10C, 10D, 10E) according to claim 2, wherein
the vehicle front portion structure (10, 10A, 10C, 10D, 10E) includes second cover members (34) that extend in the vehicle front-rear direction and that cover outer side surfaces, in the vehicle width direction, of the upper member portions (18), and
the second cover members (34) are secured to the frame body portion (12).

6. The vehicle front portion structure (10, 10A, 10C, 10D, 10E) according to claim 5, wherein the second cover members (34) are formed integrally with the first cover member (30).

7. The vehicle front portion structure (10, 10A, 10B, 10C, 10D, 10E) according to claim 3, wherein
the vehicle front portion structure (10, 10A, 10B, 10C, 10D, 10E) includes a suspension tower bar (40) that interconnects the left and right pair of suspension tower portions (22) in the vehicle width direction, and
the first cover member (30) has a securing portion (38) that is secured to the suspension tower bar (40).

8. The vehicle front portion structure (10C) according to claim 2 or 3, wherein
the vehicle front portion structure (10C) includes a cowl portion (50) that interconnects the left and right pair of upper member portions (18) in the vehicle width direction, and
the vehicle front portion structure (10C) has load transfer portions (37) that interconnect the cowl portion (50) and the first cover member (30) in the vehicle front-rear direction.

9. The vehicle front portion structure (10, 10A, 10B, 10C, 10D, 10E) according to any one of claims 1 to 3, wherein the first cover member (30) is configured by a member that has a higher ductility than the frame body portion (12).
